(19)

Europäisches Patentamt

European Patent Office

Office européen des brevets

(11) **EP 2 403 244 A1**

(12) **EUROPEAN PATENT APPLICATION**

(43) Date of publication:
**04.01.2012 Bulletin 2012/01**

(51) Int Cl.:
*H04N 7/16* (2011.01)      *H04N 7/173* (2011.01)
*H04N 7/167* (2011.01)

(21) Application number: **10305709.7**

(22) Date of filing: **01.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Thomson Licensing**
**92130 Issy-les-Moulineaux (FR)**

(72) Inventors:
• **Durand, Alain**
  **92443, Issy-Les-Moulineaux (FR)**
• **Lefebvre, Frédéric**
  **92443, Issy-Les-Moulineaux (FR)**

(74) Representative: **Le Dantec, Claude**
**Technicolor**
**1-5 rue Jeanne d'Arc**
**92130 Issy-les-Moulineaux (FR)**

(54) **Secure encryption method for electronic content distribution**

(57)    The invention relates to an encryption method for electronic content distribution, a content being distributed from a server to a plurality of users, the encryption method comprising the steps of partionning the content into at least two parts among which a first part and a second part, encrypting the first part using a session key; encrypting the second part using a permanent key. According to preferred embodiments, the session key is generated for each user and different for each user while the permanent key is shared by at least some users among the plurality of users.

Figure 1

**Description**

Field of the invention

The invention relates to data encryption and electronic content distribution. More particularly the invention relates to a secure encryption method for electronic content distribution.

Back ground of the invention

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

By content, it should be understood any film, music or text. In an electronic content distribution system, audio and video content is encoded into digital data stream and is distributed to end-user through a digital network.

As an illustrative example, the following description will be directed to protection of electronic content, such as those obtained for instance by JPEG2000 encoding. The skilled person will however appreciate that the data protection of the present invention may also be used in analogous fields in which data is distributed in formats having the necessary properties.

It has long been known to protect content by encryption, notably in conditional access television system or in Digital Rights Management (DRM) system. Thus, content in particular distributed through Video-On-Demand (VOD) systems, is encrypted using an encryption key. Two methods are known to manage the content encryption key relying on standard encryption.

In a first method, a different content encryption key is used at each content download. The content encryption key is randomly generated by the content server or established with the client. An advantage of this method is to provide content distribution with a high security level as a key compromise only allows one user to access to clear content. However, the method has two major drawbacks:

- Efficiency: the server has to encrypt in real-time the content at each new download. This requires a lot of real-time resources as the server may have to handle simultaneously hundreds of user in the case of a content push scenario (i.e. content is sent to the user without any solicitation);
- Security on the server: Content is generally stored on the server as clear content (i.e. not protected by encryption) and thus the content is only protected with access control measures. A network type of attack may thus allow accessing the content. This could be countered by encrypting the content on the server but would yet decrease the system efficiency.

In a second method, content is pre-encrypted and stored encrypted on the server and delivered as is to users. Content encryption key is delivered on a dedicated encryption link. If this system is really efficient, it presents only a weak level of security has once a content key has been stolen, it can be redistributed to other users having the same encrypted content (e.g. in the case of a content push scenario).

Selective encryption has been designed to cope with performance issues of standard encryption. The idea is to selectively encrypt part of the content such that decryption is absolutely mandatory to decode content. Documents EP2141923 "Methods and apparatuses for selective data encryption" (from A. Massoudi and F. Lefebvre) and "Secure and low cost selective encryption for JPEG2000" (from A. Massoudi, F. Lefebvre, C. De Vleeschouwer and F.-O. Devaux, in IEEE International Symposium on Multimedia (ISM'08), December 2008) describe a selective encryption algorithm which presents the same security level as standard encryption. However, this kind of technology being relatively new, does not benefit from the same trust since part of the content is even not encrypted before being distributed. An advantage of selective encryption method is to allow encryption with key dedicated to each user at a much lower cost in term of real-time resources at the server than standard encryption method.

However, in a first approach, selective encryption still involves storing the content as clear content on the server and thus let content security rely on access control, which is not desirable. This first drawback can be easily overcome since computation cost is reduced with selective encryption scheme compared to standard encryption. For instance, one can selectively encrypt the content before storing it on the server. The content needs then to be decrypted and re-encrypted with user dedicated key before being sent to a user, which requires twice as much computation effort. Another option is to prepare in advance multiple instances of content encrypted selectively using several keys, to deliver one instance to exactly one user and to re-generate a new selectively encrypted file.

Yet another drawback of selective encryption is that the choice of the part to encrypt is generally dependent upon the content format.

Other known encryption method relies on partitioning the content and encrypting different parts of the content with different keys. However such methods are directed at providing distribution scheme in which varying levels of content resolutions are securely provided to end-users. In others words, in the context of scalable video coding, a first resolution level implementing low quality is encrypted with a first encryption key, while respectively higher resolution levels respectively implementing higher qualities are respectively encrypted with different keys. Therefore keys are dedicated to user entitlement, i.e. key is common to users sharing same entitlements rights, for example to users having rights to access HD content. Even if using multiple keys, this method faces same weak level of security since a compromised key can be shared by many users.

Therefore, none of the techniques of the prior art are satisfactory both in terms of efficiency and of security. Selective Encryption achieves the best compromise but fails providing the expected trust level from content providers.

An encryption method for electronic content distribution providing a security level and an efficiency comparable with selective encryption while keeping the same trust level as the one provided by standard encryption is needed.

Summary of the invention

To this end, the invention relates to an encryption method for electronic content distribution, a content being distributed from a server to a plurality of users, the encryption method comprising the steps of partionning the content into at least two parts among which a first part and a second part, encrypting the first part using a session key; encrypting the second part using a permanent key. According to preferred embodiments, the session key is generated for each user and different for each user while the permanent key is shared by at least some users among the plurality of users.

The main idea is to divide the content into two parts, each part being encrypted with different keys: one broadcast permanent key common to all users and one session key dedicated to one user. Besides, the content is advantageously divided into two parts such that the first part is not predictable knowing the second part and vice versa. This distinguishing feature advantageously offers a high security level since both decrypted parts of the content, i.e both the common permanent key and the session key, are necessary at the user side, in order to decode the content. Besides since the whole content is distributed in an encrypted way, the method should comply with the content provider trust level expectations. It should be noticed that, in a variant where the content comprises more than 2 parts, the remaining parts (i.e. different from first and second part) are encrypted or remain clear (i.e not encrypted).

In a first preferred embodiment, the first part is selected by a selective encryption algorithm. In another preferred embodiment, the first and the second part of the content are encrypted by a standard encryption algorithm. These two embodiments advantageously offer a method for selecting a first part of content and encrypting both part in order to guarantee cryptographic security. Advantageously, according to the choice and criteria of selective encryption algorithm, the first part represents between 50% of the content and as less as 5% of the whole content. Therefore, the computation needs for encrypting the content for each user using the dedicated session key are reduced.

In a second preferred embodiment, the first part is pre-encrypted with a storage key different from the session key. In another preferred embodiment, the encryption method further comprises, before the step of encrypting the first part using a session key, a step of decrypting the first part pre-encrypted with a storage key. The storage key protects the storage of the first part of content at the server. Therefore both first part and second part of the content are advantageously encrypted while being stored on the server thus offering a better security level at the server. The content needs then to be decrypted and re-encrypted with a session key before being sent to a user. When selective encryption algorithm is used for the first part, computation cost is accordingly reduced in such a decrypt re-encrypt scheme.

In third preferred embodiment, the encryption method further comprises a step of delivering the session key, used for encrypting the first part of the content, on a first communication channel; and a step of delivering the permanent key, used for encrypting the second part of the content, on a second communication channel. In a variant, the first communication channel and the second communication channel are secured with two different communication channel keys. In another preferred embodiment, the encryption method further comprises a step of delivering the session key, used for encrypting the first part of the content, protected by a first key on a communication channel; and a step of delivering the permanent key, used for encrypting the second part of the content, protected by a second key on the same communication channel .Theses embodiments advantageously improve the security for keys delivery.

In a fourth preferred embodiment, the content is JPEG2000 encoded. Thus a selective encryption algorithm as taught in "Secure and low cost selective encryption for JPEG2000" (from A. Massoudi, F. Lefebvre, C. De Vleeschouwer and F.-O. Devaux, in IEEE International Symposium on Multimedia (ISM'08), December 2008) is advantageously used for selecting and encrypting the content guaranteeing cryptographically secure encrypted content.

In a fifth preferred embodiment, the method is implemented in a server.

In a second aspect, the encryption method is extended to the context where the content is further distributed from a user device server to a plurality of user devices. The encryption method further comprises implemented in a user device server, the steps of decrypting the first part encrypted using the session key; encrypting the first part using a user session key generated for a device.Thus the session key shared with the server is advantageously not distributed inside the home network but the content is still re-distributed in an encrypted way at a reduced cost of computation at the user side. According to a preferred embodiment, the user device serv-

er is a gateway.

<u>Brief description of the drawings</u>

Other characteristics and advantages of the invention will appear through the description of a non-limiting embodiment of the invention, which will be illustrated, with the help of the enclosed drawing.

- **Figure 1** illustrates an encryption method according to a first preferred embodiment of the invention,
- **Figure 2** illustrates an encryption method according to a second preferred embodiment in which the content is pre-encrypted,
- **Figure 3** illustrates content partitioning according to a preferred embodiment,
- **Figure 4** illustrates a decryption method according to a preferred embodiment,
- **Figure 5** illustrates an encryption method according to a variant embodiment relative to super-distribution in a home network,
- **Figure 6** represents a device performing the encryption method according to a preferred embodiment,
- **Figure 7** represents a device performing the decryption method according to a preferred embodiment.

<u>Detailed description of preferred embodiments</u>

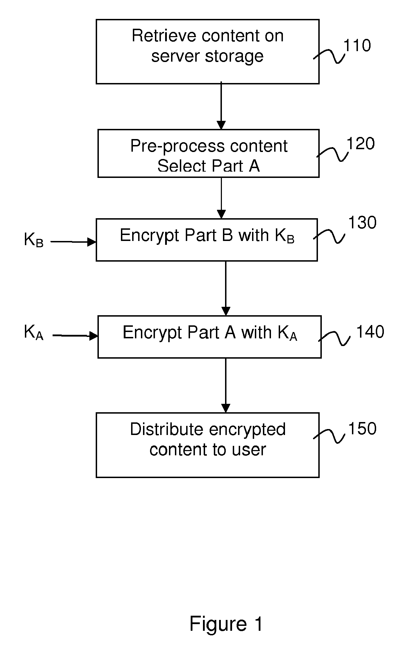

The following detailed description of a preferred embodiment of the invention refers to **Figure 1.** The content is stored as is on the content server. In a first step 110, the content is retrieved from the server storage in order to be processed by an encryption method before being sent to end-users. In step 120, the content is pre-processed. A part of the content, hereafter Part A, is selected and signaling information, identifying two encryption keys, is inserted in the content container. For example, in case the content container format is MPEG2-TS, the transport stream packet comprises 2 bits for scrambling control where '00' is set for a packet not scrambled, '10' is set for a packet scrambled with even key (for example $K_A$), '11' is set for a packet scrambled with odd key (for example $K_B$), and where '01' is reserved for future use. In step 130, remaining part of the content, hereafter Part B, is encrypted using a permanent key $K_B$. Advantageously, permanent key $K_B$ is shared amongst all users. In a variant, permanent key $K_B$ is shared by a group of users for instance having the same permission rights. For example key $K_B$ is the control word used for scrambling. The skilled in the art will noticed that permanent key means shared or common but does not refers to temporal properties (i.e. constant for the whole content encoded bit stream). In step 140, Part A, is encrypted using a session key $K_A$. Advantageously, session key $K_A$ is generated and delivered to only one user. According to variant embodiments, step 130 and step 140 are performed sequentially or simultaneously. In step 150, the content, comprising encrypted Part A and encrypted Part B is distributed to end users through the network.

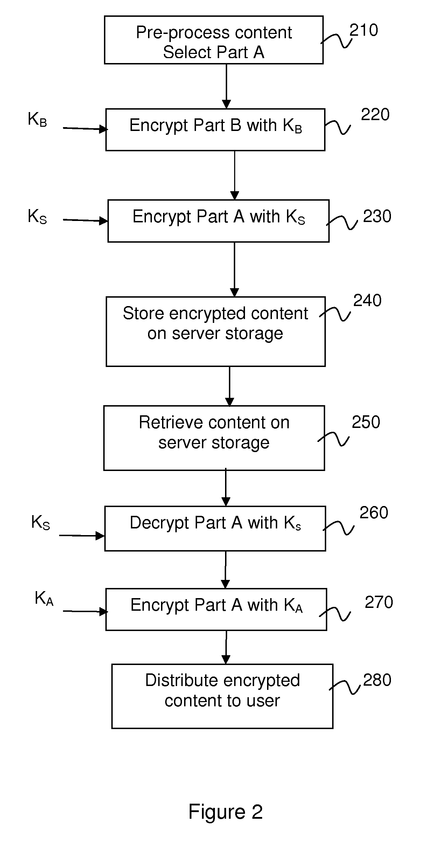

**Figure 2** illustrates an encryption method according to a second embodiment where the content is pre-encrypted: The content stored the content is pre-processed in order to be stored pre-encrypted in the content server. This variant embodiment advantageously improves security at the server while not decreasing the system efficiency. In a first step 210, a part of the content, hereafter Part A, is selected and signaling information is inserted in the content for encryption/decryption purpose. In step 220, remaining part of the content, Part B, is encrypted using a permanent key $K_B$. In step 230, Part A, is encrypted using a storage key $K_S$. Key $K_s$ is dedicated to the server storage and is not shared by any users. Furthermore key $K_S$ is different from the session key $K_A$. As for previous embodiment, step 220 and 230 are processed simultaneously or sequentially. In step 240, the pre-encrypted content is stored on the server, comprising encrypted Part A and encrypted Part B. Then in step 250, the pre-encrypted content is retrieved from the server storage for being distributed to a user. In step 260, the pre-encrypted Part A is decrypted using storage key $K_s$. In step 270, Part A is encrypted using a session key $K_A$ advantageously established for the user to which the content is distributed. Pre-encrypted Part B advantageously do not need further processing thus limiting power computation at the step of distributing content to the user. In step 280, the content, comprising Part A encrypted using session key $K_A$ and Part B encrypted using permanent key $K_B$ is distributed to end user through the network.

In others words, in this variant embodiment, content is pre-processed in step 210 to divide content into Part A and Part B and content is pre-encrypted in step 220 and step 230 for storage protection. The encryption method further comprises, before the step of encrypting Part A using a session key $K_A$, a step of decrypting Part A pre-encrypted with the storage key $K_s$ protecting the storage of Part A of content at the server.

It will be appreciated that for theses embodiments, several aspects of the key management are detailed. The key $K_A$, specific to each user is generated upon delivery of the content for further being used to selectively encrypt Part A (that is previously decrypted if necessary). Advantageously, the key $K_A$ used for encrypting Part A is different from the key $K_B$ used for encrypting Part B. The user receives a fully encrypted content together with two different keys: the permanent key $K_B$ common for all users and the session key $K_A$ generated upon content delivery to the user. The distribution of keys $K_A$, $K_B$ to user is known from the man skilled in the art. For instance in DRM system key is transported in a Content License associated with the content. In a variant relative to conditional access system, key is transported in an Entitlement Control Message (ECM). In another variant, key is transmitted through a Secure Authenticated Channel. In a preferred embodiment, the delivery channel for these two keys is different.

In preferred embodiments, Part A and Part B are selected by a selective encryption algorithm, hereafter SEE, and then encrypted by a standard encryption algorithm, hereafter STE. Selective encryption algorithm aims at reducing the amount of data to encrypt while achieving a sufficient and inexpensive security. Thus main idea of selective encryption — also known as "partial encryption", "soft encryption", or "perceptual encryption" — consists in applying encryption to a subset of a content with the expectation that the resulting partially encrypted content is useless without the decryption of the encrypted subset. Thus, SEE advantageously offers a means for dividing the content into 2 parts, Part A and Part B. The invention is remarkable in that both parts need to be decrypted at the user side using different keys. However, SEE usually depends on the content encoding format.

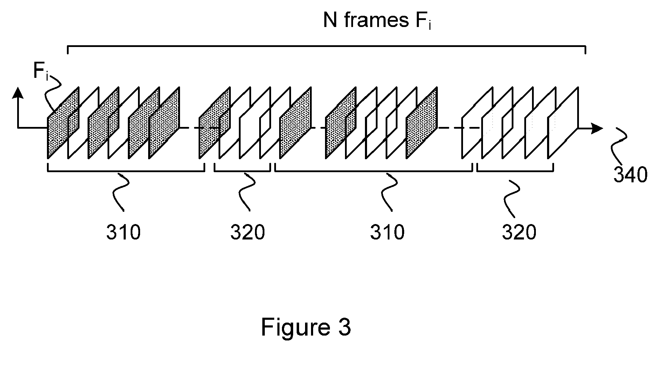

In a fourth preferred embodiment, the content is JPEG2000 encoded. **Figure 3** illustrates content partitioning according to the exemplary JPEG2000 embodiment. Let C be a MJPEG2000 movie file. C is composed of N JPEG2000 still images $F_i$ :

$$ M = \left\{ F_i \right\}_{i=o..N-1} $$

C is divided in 2 parts, Part A 320 and Part B 310. Let $P_A$ be the subset of frames in Part A and $P_B$ the subset of frames in part B:

$$ P_A = \left\{ F_k \right\}_{k=0..N-1} $$

$$ P_B = \left\{ F_j \right\}_{j=0..N-1, \, j \neq k} $$

$F_k$ is the frame selected at the position 340 k to be encrypted by the session key. The selection (position and number) of the frames in Part A to be selectively encrypted is driven by the application. For example, in case of frames encoded with JPEG2000, the most significant layer (layer 0) at all resolutions is selected as part A. Thus selection is done among frames in the spatial domain. Part A represents about only 5% of the bit stream of the frames. It should be noticed that Part A refers to division in either spatial or temporal domain

"Secure and low cost selective encryption for JPEG2000" (from A. Massoudi, F. Lefebvre, C. De Vleeschouwer and F.-O. Devaux, in IEEE International Symposium on Multimedia (ISM'08), December 2008) describes such a selective encryption algorithm for JPEG2000 that exploits the R-D optimization performed by JPEG2000 EBCOT algorithm.

Among some relevant criteria and features for evaluating SEE, cryptographic security is defined by opposition to security evaluated using visual degradation.

Indeed even if a high visual degradation is achievable, important security leakages might be pointed out. Thus cryptographic security relying on the encryption key and the unpredictability of the encrypted part is defined. More specifically, this SEE, based on Shannon decorrelation, guarantees that predicting the content knowing either clear Part A or clear Part B is probabilistically more complex than predicting the content knowing the encrypted Part A and encrypted part B. Therefore the SEE algorithm as taught in cited document is particularly well adapted to fourth preferred embodiment wherein the content is JPEG2000 encoded.

As JPEG2000 is proposed as a non-limitative embodiment of the invention, a brief introduction to relevant parts of this standard, i.e. its code stream structure, will now be given. A JPEG2000 code stream is organized into packets, code stream packets are elementary units that transport data from a specific combination of entities called Resolution, Layer, Component and Precinct. A compressed image with R resolutions, L layers, P precincts and C components, thus results in RxLxCxP packets. JPEG2000 makes use of an embedded bit stream: the code stream can be truncated at any given end of packet without adverse impact on previously coded ones.

Each packet is composed of independent code block contributions. Only few bytes in each code block contribution of each packet from S (S=RxLxCxP) is encrypted. The skilled in the art will appreciate that, as described in "Secure and low cost selective encryption for JPEG2000" (from A. Massoudi, F. Lefebvre, C. De Vleeschouwer and F.-O. Devaux, in IEEE International Symposium on Multimedia (ISM'08), December 2008), only 16 bytes per code block contribution are encrypted by using AES in counter mode (CTR mode) to achieve the cryptographic security as previously defined. The distribution of $K_A$ and CTR initialization vector are are well known from the skilled in the art. According to different variants, they are transported in a Content Licence associated with the content or transmitted in ECM. Thus, the security part of JPEG2000 is called JPSEC. It defines a framework for security services such as confidentiality, access control, integrity protection, authentication and ownership protection. It addresses encryption, key generation and management, signature generation and verification, scrambling. It is achieved by two marker segments: Security Marker (SEC) segment and In-Codestream Security Marker (INSEC) segment.

All the frames in $P_B$ are encrypted by a standard encryption algorithm STE. $K_B$ is the key used for standard encryption. Key $K_B$ is common to all users. The skilled in the art will appreciate that, for example all frames in $P_B$ are encrypted by AES encryption algorithm with a key of 128 bits (16 BYTES) in counter mode (CTR mode). As already discussed, the distribution of $K_B$ and CTR initialization vector are well known from the skilled in the art. According to different variants, they are transported in a Content Licence associated with the content or transmitted through a Secure Authenticated Channel.

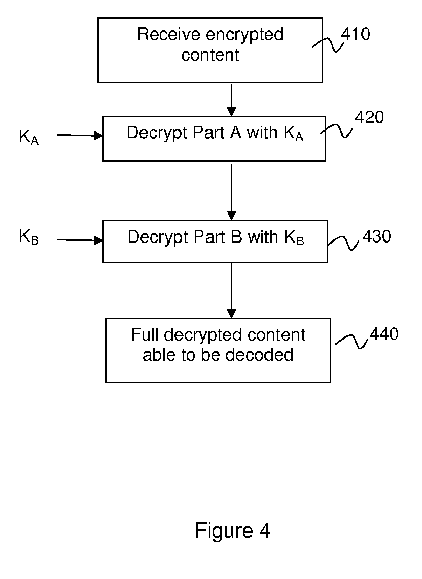

**Figure 4** illustrates a decryption method according to a preferred embodiment. In a first step 410, the encrypted content is received at the end-user device together with signaling information on the encryption scheme. $K_A$ and $K_B$ keys are received according to variant embodiment at the end-user device. In step 420, Part A of the content, for instance signaled as being encrypted using even key, is decrypted using a session key $K_A$ dedicated to the end user. In step 430, encrypted Part B of the content, for instance signaled as being encrypted using odd key, is decrypted using a key $K_B$ shared amongst all users. Step 420 and step 430 are processed sequentially or simultaneously according to variant implementations. In step 440, full content, comprising decrypted Part A and decrypted Part B is sent towards decoder so that the user can enjoy the content. End-user device is for example a gateway connected to digital network.

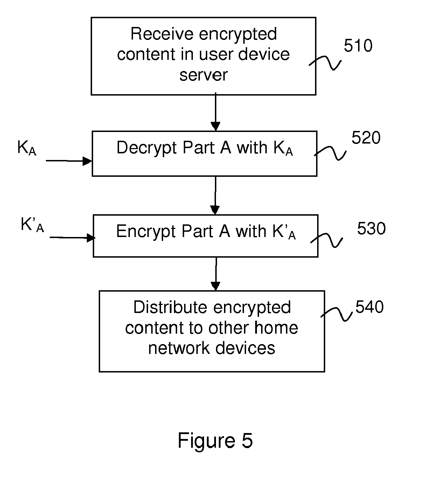

**Figure 5** illustrates a decryption method according to a variant embodiment relating to super-distribution or home re-distribution of content. The end-user device acts a server for a home network and further delivers content from the provider to various users devices belonging to the home network. In a first step 510, the encrypted content is received at the end-user device server together with signaling information on the encryption scheme. $K_A$ and $K_B$ keys are received according to variant embodiment at the end-user device server. In step 520, Part A of the content, for instance signaled as being encrypted using even key, is decrypted using a session key $K_A$ dedicated to the end user. In step 530, Part A of the content is encrypted using a session key $K'_A$. This session key $K'_A$ is generated for a dedicated user device according to various embodiment. Encrypted Part B of the content, for instance signaled as being encrypted using odd key, is advantageously not decrypted thus limiting computation power while guaranteeing security in home distribution. Step 520 and step 530 are processed sequentially or simultaneously according to variant implementation. In step 540, full content, comprising encrypted Part A and encrypted Part B is sent towards other user devices so that the user can enjoy the content anywhere in his home network. End-user device server is for example a personal computer or a gateway connected to digital network. End-user devices are for example a TV set, a decoder, a portable media player, or even a mobile phone connected to digital home network.

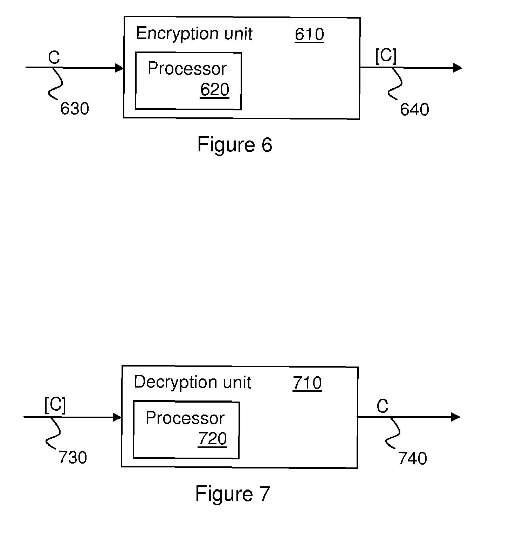

**Figure 6** illustrates an encryption device for encryption according to a preferred embodiment of the invention. The encryption device 610 comprises at least one processor (hereinafter "processor") 620, an input 630 for receiving at least one content C to encrypt and an output 640 for outputting encrypted content [C]. An encryption device is for example a server at the content provider.

**Figure 7** illustrates a decryption device according to a preferred embodiment of the invention. The decryption device 710 comprises at least one processor (hereinafter "processor") 720, an input 730 for receiving at least one content [C] to decrypt and an output 740 for outputting decrypted content C. A decryption device is for example a gateway, a personal computer, a TV set, a decoder, a portable media player, or even a mobile phone connected to digital home network.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated connections.

It will be appreciated that the present invention is not limited to the preferred embodiment, JPEG2000, but may equally be used in other systems having a similar, layered architecture of the compressed pictures. Reference numerals appearing in the claims are by way of illustration only and shall have no limiting effect on the scope of the claims.

**Claims**

1. An encryption method for electronic content distribution, a content being distributed from a server to a plurality of users, **characterized in that** said encryption method comprises, the steps of :

   partionning (120, 210) said content into at least two parts among which a first part (Part A) and a second part (Part B),
   encrypting (140, 230) the first part (Part A) using a session key ($K_A$);
   encrypting (130, 220) the second part (Part B) using a permanent key ($K_B$).

2. The encryption method according to claim 1 **characterized in that** the session key ($K_A$) is generated for each user and different for each user.

3. The encryption method according to claim 1 **characterized in that** the permanent key ($K_B$) is shared by at least some users among the plurality of users.

4. The encryption method according to any of claims 1 to 3 **characterized in that** the first part (Part A) is selected by a selective encryption algorithm.

5. The encryption method according to any of claims 1 to 4 **characterized in that** the first part (Part A) and the second part (Part B) are encrypted by a standard encryption algorithm.

6. The encryption method according to any of claims 1 to 5 **characterized in that** the first part (Part A) represents as less as 5% of the whole content.

**7.** The encryption method according to any of claims 1 to 6 **characterized in that** the first part (Part A) is pre-encrypted with a storage key ($K_S$) different from the session key.

**8.** The encryption method according to claim 7 further comprising, before the step of encrypting (270) the first part (Part A) using a session key ($K_A$), a step of decrypting (260) the first part pre-encrypted with the storage key ($K_S$).

**9.** The encryption method according to any of claims 1 to 8 further comprises steps of :

delivering the session key ($K_A$), used for encrypting the first part of the content, on a first communication channel;
delivering the permanent key ($K_B$), used for encrypting the second part of the content, on a second communication channel.

**10.** the encryption method according to any of claims 1 to 8 further comprises steps of :

delivering the session key ($K_A$), used for encrypting the first part of the content, protected by a first key on a communication channel;
delivering the permanent key ($K_B$), used for encrypting the second part of the content, protected by a second key on said communication channel.

**11.** The encryption method according to any of claims 1 to 10 **characterized in that** the content is JPEG2000 encoded.

**12.** The encryption method according to claim 1 where the content is further distributed from a user device server to a plurality of user devices, **characterized in that** said encryption method further comprising, implemented in a user device server, the steps of :

decrypting (520) the first part encrypted using the session key($K_A$);
encrypting (530) the first part using a user session key generated for a device($K'_A$).

**13.** The encryption method according to claim 12 **characterized in that** the user device server is a gateway.

**14.** The encryption method according to claim 1 **characterized in that** the method is implemented in a server.

Retrieve content on
server storage 110

Pre-process content
Select Part A 120

$K_B$ ⟶ Encrypt Part B with $K_B$ 130

$K_A$ ⟶ Encrypt Part A with $K_A$ 140

Distribute encrypted
content to user 150

Figure 1

Figure 2

N frames $F_i$

$F_i$

310    320    310    320

340

Figure 3

Receive encrypted content — 410

$K_A$ → Decrypt Part A with $K_A$ — 420

$K_B$ → Decrypt Part B with $K_B$ — 430

Full decrypted content able to be decoded — 440

Figure 4

Receive encrypted
content in user device
server
510

$K_A$ → Decrypt Part A with $K_A$
520

$K'_A$ → Encrypt Part A with $K'_A$
530

Distribute encrypted
content to other home
network devices
540

Figure 5

Encryption unit     <u>610</u>

C   →    Processor    <u>620</u>      [C] →

630                    640

Figure 6

Decryption unit     <u>710</u>

[C]   →    Processor    <u>720</u>      C →

730                    740

Figure 7

Europäisches
Patentamt

European
Patent Office

Office européen
des brevets

# EUROPEAN SEARCH REPORT

**Application Number**

EP 10 30 5709

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/256615 A1 (SCHLACHT DAVID N [US] ET AL) 16 October 2008 (2008-10-16) * paragraph [0106] - paragraph [0117] * ----- | 1-14 | INV. H04N7/16 H04N7/173 H04N7/167 |
| A,D | MASSOUDI A ET AL: "Secure and Low Cost Selective Encryption for JPEG2000" MULTIMEDIA, 2008. ISM 2008. TENTH IEEE INTERNATIONAL SYMPOSIUM ON, IEEE, PISCATAWAY, NJ, USA, 15 December 2008 (2008-12-15), pages 31-38, XP031403511 ISBN: 978-0-7695-3454-1 * the whole document * ----- | 1,11 | |
| A | SADOURNY Y ET AL: "A PROPOSAL FOR SUPPORTING SELECTIVE ENCRYPTION IN JPSEC" IEEE TRANSACTIONS ON CONSUMER ELECTRONICS, IEEE SERVICE CENTER, NEW YORK, NY, US LNKD- DOI:10.1109/TCE.2003.1261164, vol. 49, no. 4, 1 November 2003 (2003-11-01), pages 846-849, XP001201211 ISSN: 0098-3063 * abstract * ----- | 1 | |
| A | US 2001/036271 A1 (JAVED SHOEB M [US]) 1 November 2001 (2001-11-01) * figure 14 * * paragraph [0092] * ----- | 1 | |
| A | EP 2 141 923 A1 (THOMSON LICENSING [FR]) 6 January 2010 (2010-01-06) * abstract * ----- | 1 | |
| A | EP 1 821 538 A1 (IRDETO ACCESS BV [NL]) 22 August 2007 (2007-08-22) * abstract * ----- | 1 | |

**TECHNICAL FIELDS SEARCHED (IPC)**

H04N

The present search report has been drawn up for all claims

| Place of search | Date of completion of the search | Examiner |
|---|---|---|
| The Hague | 14 October 2010 | Cooke, Edward |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 10 30 5709

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2010

| Patent document cited in search report | | Publication date | Patent family member(s) | | Publication date |
|---|---|---|---|---|---|
| US 2008256615 | A1 | 16-10-2008 | NONE | | |
| US 2001036271 | A1 | 01-11-2001 | NONE | | |
| EP 2141923 | A1 | 06-01-2010 | WO 2010000727 | A1 | 07-01-2010 |
| EP 1821538 | A1 | 22-08-2007 | AU 2007200636 | A1 | 30-08-2007 |
| | | | BR PI0700415 | A | 06-11-2007 |
| | | | CA 2578710 | A1 | 15-08-2007 |
| | | | CN 101034972 | A | 12-09-2007 |
| | | | KR 20070082563 | A | 21-08-2007 |
| | | | US 2007189525 | A1 | 16-08-2007 |
| | | | ZA 200701114 | A | 29-07-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2141923 A

**Non-patent literature cited in the description**

- **A. MASSOUDI ; F. LEFEBVRE ; C. DE VLEESCHOUWER ; F.-O. DEVAUX.** *IEEE International Symposium on Multimedia (ISM'08,* December 2008